# EUROPÄISCHE PATENTSCHRIFT

(11) **EP 1 324 866 B1**
(45) Veröffentlichungstag und Bekanntmachung des Hinweises auf die Patenterteilung: **19.04.2006**
(21) Anmeldenummer: 01986635.9
(22) Anmeldetag: 08.10.2001
(51) Int. Cl.: B29C 41/04, B29C 41/14, B29K 96/04

(54) **VERFAHREN ZUR HERSTELLUNG WENIGSTENS EINES KÖRPERS UND FLIESSFÄHIGE MISCHUNG ZUR VERWENDUNG IN EINEM SOLCHEN VERFAHREN**
METHOD FOR THE PRODUCTION OF AT LEAST ONE BODY AND A POURABLE MIXTURE FOR USE IN SUCH A METHOD
PROCEDE DE REALISATION D'AU MOINS UN CORPS, ET MELANGE COULABLE A UTILISER DANS UN TEL PROCEDE

(30) Priorität: 09.10.2000 DE 10049753; 16.08.2001 DE 10140036
(43) Veröffentlichungstag der Anmeldung: 09.07.2003
(73) Patentinhaber: Zapf Creation AG, 96472 Rödental (DE)
(72) Erfinder: BARICH, Gerhard, 85258 Weichs (DE)
(74) Vertreter: Zech, Stefan Markus
(86) Internationale Anmeldenummer: PCT/DE2001/003815
(87) Internationale Veröffentlichungsnummer: WO 2002/030649

(56) Entgegenhaltungen:
- EP-A- 0 261 499
- WO-A-91/05014
- WO-A-93/25614
- WO-A-95/17467
- GB-A- 2 003 420
- US-A- 3 827 999
- US-A- 4 125 506
- US-A- 4 143 185
- US-A- 4 199 486
- US-A- 4 734 313
- US-A- 4 877 566
- US-A- 5 654 361
- US-A- 5 668 209

## Beschreibung

Die Erfindung betrifft ein Verfahren zur Herstellung wenigstens eines Körpers und eine fließfähige Mischung:

In der Herstellung und Verarbeitung von Kunststoffen oder Polymerwerkstoffen sind eine Vielzahl von unterschiedlichen Verfahren bekannt. Eine grobe Übersicht über diese bekannten Prozesse findet sich beispielsweise in *Adolf Franck, "Kunststoff-Kompendium*", *5. Auflage, Vogel- Verlag, Würzburg, 2000, S. 141 bis 206.*

Eines der bekannten Verfahren zum Herstellen von Körpern aus Kunststoff beruht auf dem Verarbeiten von Pasten oder Suspensionen, die in einem Fluid (oder einer Flüssigkeit) befindliche Partikel (oder: Teilchen) aus Kunststoff oder einer Zusammensetzungmit Kunststoffanteil enthalten (vgl. *Adolf Franck, "Kunststoff-Kompendium", Seiten 149, 190 und 191*)*.* Die Begriffe "Paste" und "Suspension" bezeichnen im Sinne der vorliegenden Anmeldung alle fließfähigen Mischungen aus Teilchen und Fluid(en) und damit sowohl flüssige Mischungen mit einer niedrigen Viskosität als auch zähflüssige (oder: viskose) Mischungen mit höherer Viskosität.

Das Verarbeiten von Pasten, Suspensionen oder Plastisolen wird laut *Adolf Franck, "Kunststoff-Kompendium", Seite 190* praktisch ausschließlich mit Polyvinylchlorid(PVC)-Pulver und Weichmachern durchgeführt, wobei bei der Verarbeitung zu Weich-PVC das Pulver durch einen Geliervorgang aufgeschlossen wird. Hierzu wird zunächst PVC-Pulver aus hochmolekularem PVC-Kunststoff mit Stabilisatoren, Gleitmitteln und ggf. Pigmenten sowie mit 20 % bis 60 % Weichmacher je nach gewünschtem Härtegrad des Endprodukts intensiv zu einer Paste oder Suspension vermischt. Dabei sind Kombeschaffenheit (Schüttdichte) und Korngröße des PVC-Pulvers von Bedeutung. Die Herstellung der fließfähigen Mischung aus PVC-Pulver und Zusatzstoffen wird als "verpasten" und die hergestellte Mischung auch als "(Weich-PVC-)Plastisol" bezeichnet. Bei der Gelierung wird das mit Weichmacher vermischte oder suspendierte hochmolekulare PVC-Pulver beim Überschreiten einer bestimmten Temperatur gequellt und aufgeschmolzen. Bei genügend hoher Temperatur und genügend langer Zeit tritt eine Migration des Weichmachers in das PVC-Molekulargerüst ein, wodurch ein deutlicher Viskositätsanstieg stattfindet. Beim Abkühlen erhöht sich die Viskosität weiter und es entsteht ein fester Körper, in dessen Molekülfilz die Weiehmachermoleküle eingelagert sind. Je mehr Weichmacher eingelagert ist, desto geringer ist die mechanische Festigkeit und umso höber ist die Flexibilität. Der entstandene Körper wird auch als Plastigel bezeichnet und hat die Eigenschaften eines elastischen Festkörpers (vgl. *Adolf Franck, "Kunststoff-Kompendium", Seiten 190 und 191*).

Dieser Geliervorgang kann gemäß *Adolf Franck*, *"Kunststoff-Kompendium* ", *Seite 191* in verschiedenen Verarbeitungsprozessen genutzt werden, bei denen sich die Plastisole aus Kunststoffpulver, Weichmacher und Zusatzstoffen beim Erhitzen durch den Geliervorgang verfestigen.

Beim Gießen oder Gießprozess als erstgenanntem Verarbeitungsprozess wird die Paste in einer Form (oder: einem Formwerkzeug) erhitzt. Nach dem Gelieren und Abkühlen wird der fertige Körper der Form entnommen. Lässt man nur eine Randschicht gelieren und gießt die restliche Paste aus, erhält man Hohlkörper.

Ein zweiter Herstellungsprozess ist das sogenannte Rotationsgussverfahren oder Rotationsgießen, bei dem wechselweise heiz- und kühlbare Werkzeuge um zwei Achsen rotieren, um Hohlkörper aus Thermoplasten herzustellen *(Adolf Franck, "Kunststoff-Kompendium" S. 148).* Zum Herstellen von Hohlkörpern aus Polyvinylchlorid (PVC)-Kunststoff wird eine berechnete Pasten- oder Suspensionsmenge an der heißen Wandung eines um zwei Achsen rotierenden ("taumelnden") Formwerkzeugs geliert und nach Abkühlen als fertiger Hohlkörper der Form entnommen *(Adolf Franck, "Kunststoff-Kompendium", Seite 191).*

Beim Tauchen oder einem Tauchprozess als dritter Herstellmethode werden heiße Formkerne oder Gegenstände in die Paste oder Suspension getaucht. Eine Schicht wird angeliert und haftet am heißen Formkern oder dem zu überziehenden Gegenstand. Nach dem Herausziehen aus der Paste wird der Formkern oder Gegenstand im Ofen auf über 180°C erhitzt, um das Weich-PVC bis zu einem homogenen Zustand fertig zu gelieren.

Schließlich ist als viertes Verfahren auch das Beschichten bekannt, bei dem Bahnen von Gewebe, Vlies oder Papier mit PVC-Paste bestrichen werden und anschließend durch Gelieren der Paste im Heizkanal eine PVC-Schicht erzeugt wird.

Anwendung finden mit Hilfe von PVC-Pasten oder PVC-Suspensionen hergestellte Körper in den verschiedensten Bereichen, wie z.B. in der Technik als Faltenbälge, Autotürlehnen, etc., im Freizeit- oder Sportbereich als Bälle, etc:, im Consumerbereich als Gartenzwerge oder Figuren allgemein., etc., im Hygienebereich oder auch im Spielwarenbereich als Puppen oder Puppenteile. Darüber hinaus gibt es Anwendungen als Beschichtungen von Textilien oder Glasgewebe, bei der Planenherstellung, bei der Fußbodenbelagshexstellung, als, Unterbodenschutz, als Dichtungen, bei der Handschuhherstellung (Tauchen), bei der Fötderbandherstellung, in den Verpackungsindustrie, zur Beschichtung von Werkzeuggriffen oder Kleiderbügeln oder Drähten zur Gartenzaunherstellung.

In vielen Fällen liegt eine Problematik darin, dass die PVC-Körper in engen Kontakt mit einem menschlichen Körper oder mit Körperflüssigkeiten kommen. Alle Hilfsstoffe, besonders auch die Weichmacher, unterliegen deshalb im Lebensmittelverkehr und bei Kinderspielzeug Einschränkungen nach Art und Menge. So gibt es bereits EU-Verbote für den Einsatz derartiger Produkte für Spielwaren o.ä. für Kinder bis zum Alter von drei Jahren. Ein Kemproblem bei den PVC-Plastisolen mit Weichmachern ist nämlich die unvermeidliche Migration des Weichmachers über die Zeit und sogar noch verstärkt bei erhöhten Temperaturen. Der an die Oberfläche migrierte Weichmacher wird dann vom menschlichen Körper bei Kontakt aufgenommen.

In *DE 299 19 849 U1* werden deshalb Spielwaren und Spielwarenformteile, insbesondere Puppen, Kleinkind- oder Babyspielzeug, vorgeschlagen, die aus dem weichmacherfreien Kunststoff Polyurethan (PUR) mit restelastischen Eigenschaften im gehärteten Zustand bestehen. Diese Spielwaren können nach Angaben in dieser Druckschrift somit unbedenklich in oralen Kontakt mit einem Kind oder Kleinkind kommen. Als Grundstoff für diese PUR-Spielwaren- und Spielwarenformteile ist aus der *DE 299 19 849 U1* ferner eine Mischung aus zwei flüssigen reaktiven Komponenten in einem Mischungsverhältnis zwischen 100:30 bis 100:70 bekannt. Es sind als erste reaktive Komponente ein Polyol mit Hydroxylgruppen als funktionellen Gruppen und Zusatzstoffen und als zweite reaktive Komponente ein Isocyanat oder ein Prepolymeres auf der Basis von 4,4-Diphenylmethandiisocyanat mit reaktiven NCO-Gruppen vorgesehen. Als Zusatzstoffe für die erste reaktive Komponente mit dem Polyol kömmen Kettenverlängerer, Katalysatoren, Stabilisatoren, Wasserbindemittel, Farbpasten oder Farbstoffe, Aufheller, Antioxidantien, Duftstoffe, Füll- oder Verstärkungsstoffe sowie interne Trennmittel zum Einsatz. Die beiden Komponenten werden mit dem vorgegebenen Mischungsverhältnis vermischt und als Mischung in eine Form, insbesondere eine Hohlform, ausgetragen. Die Mischung ist so eingestellt, dass der gewünschte Weichheitsgrad der späteren Spielpuppen nach einer vorgegebenen Reaktionszeit, z.B. in einem Wärmeindustrieofen, und einer anschließenden Nachhärtung bei Raumtemperatur erreicht wird. Nach dem Einbringen der Mischung in die mit einem Trennmittel versehenen Hohlform wird die Form geschlossen und es wird ein Ausschleudern der Flüssigmischung vorgenommen. Die thermoreaktiven nieder- bzw. mittelmolekularen Ausgangskomponenten reagieren durch eine an sich bekannte Polyadditionsreaktion zu einem monomerfreien Endprodukt, das nur noch aus einem einzigen Makromolekül besteht, wobei nach der Reaktion keine freien reaktiven Gruppen mehr vorhanden sind. Es können auch gleichzeitig mehrere Formen mit dem Reaktionsgemisch gefüllt und über eine geeignete mechanische Vorrichtung in eine Rotationsbewegung versetzt werden. Die einzelnen Puppenteile können auch als schalenförmige Hohlteile hergestellt werden. Nach Öffnen der Form können die Formteile entnommen und in üblicherweise weiterverarbeitet werden.

Bei der in der *DE 299 19 849 U1* beschriebenen Materialwahl eines PUR-Kunststoffes werden die gesundheitlichen Probleme bei der Verwendung der üblichen Weichkunststoffe aus Polyvinylchlorid (PVC) vermieden. Durch den Einsatz giftiger Härtersysteme können allerdings dennoch Probleme für die Gesundheit entstehen.

Aus der WO-A-9325614 ist ein Verfahren zur Herstellung wenigstens eines Körpers, bei dem der Körper aus einer fließfähigen Mischung, insbesondere einer Suspension aus Teilchen und einem Fluid erzeugt wird bekannt, wobei die Teilchen ein thermoplastisches Elastomer enthalten und eine Teilchengröße aufweisen, die unterhalb 500 µm liegt.

Der Erfindung liegt ausgehend von diesem Stand der Technik die Aufgabe zugrunde, ein Verfahren zum Herstellen von Körpern aus Kunststoff oder einer kunststoffhaltigen Zusammensetzung anzugeben, die gesundheitlich unbedenklich sind und im Allgemeinen kein PVC aufweisen, aber mit PVC vergleichbare, in sehr weiten Grenzen einstellbare Eigenschaften aufweisen. Ferner soll eine in einem solchen Verfahren verwendbare fließfähige Mischung angegeben werden

Diese Aufgabe wird hinsichtlich des Verfahrens gelöst mit den Merkmalen des Anspruchs 1 und hinsichtlich der fließfähigen Mischung gelöst mit den Merkmalen des Anspruchs 27.

Beim Verfahren gemäß Anspruch 1 wird wenigstens ein Körper aus einer fließfähigen Mischung, insbesondere einer Paste oder Suspension, hergestellt, die zumindest teilweise aus thermoplastischem Elastomer bestehende Teilchen (Partikel) in einem Fluid enthält oder umfasst.

Unter den Begriffen "enthalten" oder "umfassen" wird in der gesamten vorliegenden Anmeldung grundsätzlich, und wo anwendbar, auch der Unterfall "bestehen aus" miteinbezogen. Das heißt insbesondere für die in der Mischung suspendierten Teilchen, dass

Unter den Begriffen "enthalten" oder "umfassen" wird in der gesamten vorliegenden Anmeldung grundsätzlich, und wo anwendbar, auch der Unterfall "bestehen aus" miteinbezogen. Die Teilchen werden im Folgenden auch mitunter zur sprachlichen Vereinfachung als Kunststoffteilchen bezeichnet, worunter aber auch Teilchen zu verstehen sind, die nur teilweise aus Kunststoff bestehen. Die Gestalt des mit dem Verfahren gemäß der Erfindung hergestellten Körpers ist prinzipiell beliebig. Insbesondere können geschlossene oder teilweise offene Hohlkörper, halbschalenförmige oder flächige Körper hergestellt werden. Die Körper können ferner selbsttragend oder auch nicht selbsttragend, beispielsweise als Beschichtungen, erzeugt werden.

Die Erfindung geht aus von der Erkenntnis, dass in einem aus der PVC-Technologie bekannten Verfahren zur Herstellung von Körpern aus Kunststoff anstelle einer PVC-Paste oder PVC-Suspension als Ausgangsprodukt eine Suspension oder Paste mit wenigstens einem thermoplastischen Elastomer (oder: einem bei den Einsatztemperaturen elastischen Thermoplasten) verwendet werden kann. Damit überwindet die Erfindung ein in der Fachwelt bestehendes Vorurteil, dass das Verarbeiten von Pasten oder Suspensionen nicht zum Herstellen von Körpern aus thermoplastischen Elastomeren geeignet ist (vgl. Übersichtstabelle in *Adolf Franck, "Kunststoff-Kompendium"; Seite 149).* Die Erfindung hat nun den großen Vorteil, dass mit einer im Wesentlichen unveränderten oder nicht wesentlich abweichenden Verfahrenstechnik und Anlagentechnik Kunststoffkörper hergestellt werden können, die in ihren Eigenschaften mit Körpern aus Weich-PVC durchaus vergleichbar sind, insbesondere hinsichtlich ihrer Elastizität. Die Erfindung ermöglicht es also, bestehende Werkzeuge und Anlagen für die Herstellung von PVC-Körpern weiterzuverwenden oder beizubehalten zur Herstellung von PVC-freien Kunststoffkörpern. Die gemäß der Erfindung eingesetzten thermoplastischen Elastomere benötigen, im Gegensatz zu PVC, keine gesundheitlich bedenklichen Weichmacher. Ein Vorteil der Maßnahmen gemäß der Erfindung gegenüber dem aus *DE* 299 19 849 *U1* bekannten Herstellprozess besteht darin, dass kein Vermischen flüssiger Komponenten mit einer dabei möglichen Blasenbildung, die sich wiederum negativ auf die Konsistenz des hergestellten Hohlkörpers auswirken kann, und auch kein Aushärten mittels eventuell giftiger Härtersysteme erforderlich sind.

Vorteilhafte Ausgestaltungen, Weiterbildungen und Anwendungen des Verfahrens gemäß der Erfindung ergeben sich aus den vom Anspruch 1 abhängigen Ansprüchen.

In einer besonders vorteilhaften Ausführungsform wird der Körper aus der fließfähigen Mischung mit dem oder den TPE erzeugt oder geformt, indem die Mischung, im Allgemeinen unter Zufuhr von Wärme oder unter Temperaturerhöhung, bei wenigstens einer vorbestimmten oder bestimmbaren Prozesstemperatur (oder: einem vorgegebenen Prozesstemperaturprofil, thermischen Bedingungen) geliert wird und sich durch diesen Geliervorgang verfestigt.

Als Verarbeitungsprozesse zum Bilden des Körpers aus der fließfähigen Mischung kann insbesondere jeder der an sich bekannten Prozesse zum Verarbeiten von PVC-Plastisolen verwendet werden, bei denen in der Regel ein Geliervorgang genutzt wird. Bevorzugt sind die folgenden Verarbeitungsprozesse, die auch abhängig von der gewünschten Gestalt oder den gewünschten Eigenschaften der herzustellenden Körper ausgewählt werden:

Ein erster Verarbeitungsprozess ist gekennzeichnet durch
- das Einbringen der fließfähigen Mischung in eine Form (oder: ein Formwerkzeug) und
- das anschließende Ausbilden des Körpers, insbesondere Hohlkörpers, in der Form, indem die Form auf wenigstens eine vorbestimmte Prozesstemperatur gebracht wird und/oder auf wenigstens einer vorbestimmten Prozesstemperatur gehalten wird.

Dabei kann in einem Gussverfahren die übrigbleibende Mischung ausgeschüttet werden oder auch in einem Rotationsgussverfahren die Form, insbesondere mit wenigstens zwei Rotationsfreiheitsgraden oder mehrachsig, rotiert (oder: getaumelt) werden. In beiden Fällen erhält man dann im Allgemeinen einen Hohlkörper. Zweckmäßigerweise wird die Form nach einer vorbestimmten Zeitdauer oder nach Ausbildung des Körpers abgekühlt, im Allgemeinen auf Raumtemperatur oder darunter, und der Hohlkörper wird dann der Form entnommen. Insbesondere wird die Form in einem Ofen rotiert und vorzugsweise danach dem Ofen entnommen und dann abgekühlt. Zur Herstellung mehrerer Hohlkörper können entsprechend mehrere Formen oder eine Form mehrfach hintereinander mit der Suspension befüllt werden

In einem Tauchverfahren als zweitern Verarbeitungsprozess
- wird, wieder bei wenigstens einer Prozesstemperatur, ein mit dem Körper zu beschichtender Gegenstand oder eine Form in die fließfähige Mischung getaucht und
- der Körper bildet sich dann direkt oder gegebenenfalls nach einem Nachgelieren bei höherer Temperatur auf dem Gegenstand oder der Form aus.

Der derart gebildete Körper bleibt nun, insbesondere als Beschichtung, auf dem Gegenstand oder wird, gegebenenfalls nach Abkühlen, von der Form genommen.

Ein Beschichtungsverfahren als dritter Verarbeitungsprozess zeichnet sich durch die folgenden Verfahrensschritte aus:
- Bestreichen eines Gegenstandes mit der fließfähigen Mischung bei wenigstens einer ersten Prozesstemperatur und
- Ausbilden des Körpers als Beschichtung auf dem Gegenstand bei wenigstens einer, im Allgemeinen von der ersten Prozesstemperatur verschiedenen und im Regelfall höheren zweiten Prozesstemperatur

Die Prozesstemperatur(en) beim Herstell- oder Verarbeitungsprozess gemäß der Erfindung wird bzw. werden im Allgemeinen in einem Bereich zwischen etwa 50°C und etwa 350°C eingestellt oder gehalten, insbesondere jedoch zwischen etwa 260°C und etwa 260°C und vorzugsweise um etwa 200°C.

Eine besonders vorteilhafte Verwendung findet das Verfahren gemäß der Erfindung bei der Herstellung von Spielwaren, insbesondere Spielzeugpuppen, oder Teilen davon. Die Anwendung der Erfindung ist aber nicht auf diese spezielle Anwendung beschränkt. So können mit einem Verfahren oder einer fließfähigen Mischung gemäß der Erfindung Körper oder Körperteile aus den verschiedensten Bereichen hergestellt werden, insbesondere aus der Technik, beispielsweise für Faltenbälge oder Autotürlehnen oder Dichtungen oder Förderbänder, aus dem Freizeit- oder Sportbereich, beispielsweise als Bälle oder Handschuhe, aus dem Konsumbereich, beispielsweise als Gartenzwerge oder Figuren allgemein, oder aus dem Hygienebereich oder aus dem Verpackungsbereich. Ferner kann die Erfindung auch zum Herstellen von Planen oder Fußbodenbelägen oder Unterbodenschutz oder Beschichtungen von Textilien oder Glasgeweben oder von Werkzeuggriffen oder Kleiderbügeln oder Gartenzaundrähten eingesetzt werden.

Das oder die thermoplastische(n) Elastomer(e) in der fließfähigen Mischung, gemäß der Erfindung umfasst bzw. umfassen vorzugsweise ein Styrol-Ethylen-Butylen-Styrol (SEBS) und/oder ein Styrol-Butadien-Styrol (SBS) und/oder ein thermoplastisches Polyurethan (TPU).

Die fließfähige Mischung kann Teilchen aus einer im Wesentlichen gleichen Kunststoffzusammensetzung (oder: Compound) oder mehreren verschiedenen Kunststoffzusammensetzungen, die wenigstens ein thermoplastisches Elastomer umfassen aufweisen.

Der Anteil von thermoplastischem Elastomer (TPE) in den Teilchen in der fließfähigen Mischung kann von 1 Gewichtsprozent (Gew. %) bis kleiner 100 Gewichtsprozent reichen. Die Teilchen enthalten außer TPE wenigstens eine weitere Substanz oder Verbindung, insbesondere einen oder mehrere weitere Thermoplaste(n) (TP), ausgenommen den (amorphen) Thermoplasten PVC selbst, und/oder wenigstens einen Füllstoff und/oder wenigstens einen Farbstoff und/oder wenigstens ein Additiv. Als zusätzliche(r) Thermoplast(e) kann vorzugsweise ein Polypropylen (PP) und/oder ein Polyethylen (PE) und/oder ein Polybutylen (PB) und/oder ein Polystyrol (PS) vorgesehen sein. Der Anteil des oder der weiteren Thermoplaste in den Teilchen der fließfähigen Mischung liegt vorzugsweise zwischen 0 Gewichtsprozent und etwa 80 Gewichtsprozent.

Hinsichtlich der Teilchengrößen der Teilchen in der Mischung werden Ausführungsformen bevorzugt, bei denen im Allgemeinen wenigstens 50 %, insbesondere wenigstens 80 %, vorzugsweise 95 % oder sogar 99 % der Kunststoffteilchen eine bestimmte Teilchengröße nicht überschreiten. Als maximale Teilchengröße kann 500 µm oder 300 µm oder 100 µm oder 50 µm 20 µm oder 10 µm oder sogar nur 1 µm gewählt werden.

Hinsichtlich der Beschaffenheit oder Gestalt der Teilchen der fließfähigen Mischung kann unter einer Vielzahl von Möglichkeiten gewählt werden. Vorzugsweise haben die Teilchen zumindest teilweise eine Kömerform, eine Kugelform oder eine Faserform.

Die fließfähige Mischung, Suspension oder Paste gemäß der Erfindung kann auf verschiedene Weise hergestellt werden oder sein.

In einer ersten vorteilhaften Ausführungsform wird ein den und/oder die entsprechenden Kunststoffe und/oder Zusatzstoffe enthaltendes Ausgangsmaterial oder Ausgangsprodukt (oder: Rohmaterial) kryogen zu Teilchen oder Körnern gemahlen und anschließend werden diese Teilchen oder entsprechend das kryogen gemahlene Pulver in ein Fluid eingebracht.

In einer alternativen, besonders vorteilhaften Ausführungsform wird ein das oder die thermoplastischen Elastomere und wenigstens eine weitere Komponente enthaltende Ausgangsmaterial granuliert und die erhaltenen Granulatteilchen werden für die Suspension verwendet. Als Granulierprozess kann insbesondere ein Heißabschlagsmikrogranulierprozess, vorzugsweise eine Unterarassermikrogranulierung, oder eine Tröpfchengranulierung verwendet werden, insbesondere mit anschließender Wasserabtrennung und/oder Trocknung des beim Granulieren erhaltene Granulats.

Das Kunststoff-Ausgangsmaterial für das kryogene Mahlen oder Granulieren wird bevorzugt durch Extrudieren hergestellt und dabei plastifiziert.

Der Mischung oder den Teilchen der Mischung oder dem Ausgangsmaterial für die Herstellung der Teilchen der Mischung können verschiedene Stoffe und Substanzen zugesetzt oder beigemischt werden zur Beeinflussung der Prozess- oder Materialeigenschaften, insbesondere
- Füllstoffe, insbesondere Talkum und/oder Kreide und/oder Mineralpulver und/oder Duroplastpulver und/oder Glaspulver und/oder Ruß und/oder Titandioxid und/oder Calciumcarbonat, enthält bzw. enthalten, vorzugsweise in einem Anteil zwischen 0 Gewichtsprozent und 80 Gewichtsprozent
- Additive, insbesondere Fließverbesserer und/oder Wärmestabilisatoren und/oder Lichtstabilisatoren und/oder Alterungsstabilisatoren und/oder Trennmittel und/oder Antischaummittel und/oder Emulgatoren, enthält bzw. enthalten.
- Farbstoffe, insbesondere Farbpigmente und/oder Flüssigfarbe und/oder Farbpigment-Hilfsstoffe, enthält bzw. enthalten.

Das Fluid der fließfähigen Mischung kann ein natürliches Pflanzenöl, ein Erdölderivat und/oder ein paraffinisches Weißöl enthalten, insbesondere daraus bestehen. Als Additive können Fließverbesserer und/oder Wärmestabilisatoren und/oder Lichtstabilisatoren und/oder Alterungsstabilisatoren und/oder Trennmittel und/oder Antischaummittel und/oder Emulgatoren und/oder Farbpigmente und/oder Farbpigment-Hilfsstoffe zugesetzt sein.

Zum Herstellen der Suspension oder Paste wird im Allgemeinen eine Vielzahl von Teilchen, insbesondere das Pulver oder Granulat, mit einem Fluid vermischt Diese Vermischung wird vorzugsweise unter Vakuum in einem Vakuummischer vorgenommen. Ferner hat es sich als vorteilhaft herausgestellt, dem Teilchengemisch vor der Vermischung mit dem Fluid feinstgemahlene Kieselsäure zuzugeben.

Ein bisher nicht erreichter Vorteil ist, dass die fließfähige Mischung gemäß der Erfindung gesundheitlich unbedenklich ist und sich im wesentlichen mit unveränderter Verfahrens- und Anlagentechnik verarbeiten lässt.

Die Erfindung wird im Folgenden anhand von Ausführungsbeispielen weiter erläutert.

In einem ersten Schritt wird eine Suspension oder Paste hergestellt oder bereitgestellt, die ein Gemisch einer Vielzahl von kleinen Teilchen umfasst, die einen oder mehrere thermoplastische Kunststoffe mit elastischen Eigenschaften (thermoplastisches Elastomer TPE) wie SBS, SEBS oder TPU umfasst. Solche thermoplastischen Elastomere sind im Allgemeinen aus einer weichelastischen Matrix mit hartelastischen Domänen als Propf- oder Blockcopolymer aufgebaut Die weichelastischen Makromoleküle bewirken die Elastizität des TPE-Kunststoffs, die harteleastischen Domänen wirken als thermoplastische Vemetzungsstellen und ermöglichen die thermoplastische Verarbeitbarkeit des TPE-Kunststoffs.

Zur Herstellung des Teilchengemischs wird zunächst ein Ausgangsmaterial mit einer der gewünschten Teilchenzusammensetzung entsprechenden Zusammensetzung hergestellt, vorzugsweise durch Extrudieren (oder: einen Estzusionsprozess) in einem Extruder, das als gängiges Urformverfahren nicht näher beschrieben werden braucht

Das Ausgangsmaterial ist ein Compound aus
- 1-Gew. % bis 100 Gew. % TPE, insbesondere SBS und/oder SEBS und/oder TPU,
- 0 Gew. % bis 80 Gew. % weitere(r) TP, insbesondere PP und/oder PE und/oder PB und/oder PS;
- 0 Gew. % bis 80 Gew. % Füllstoff(en), insbesondere Talkum und/oder Kreide und/oder Mineralpulver und/oder Duroplastpulver und/oder Glaspulver und/oder Ruß und/oder Titandioxid und/oder Calciumcarbonat (CaCO3),
- Additiven, insbesondere Fließverbesserern und/oder Wärmestabilisatoren und/oder Lichtstabilisatoren und/oder Alterungsstabilisatoren und/oder Trennmitteln und/oder Antischaummitteln und/odet Emulgatoren
- Farbstoffen, insbesondere Farbpigmenten und/oder Flüssigfarbe und/oder Farbpigment-Hilfsstoffen.

Dieses Ausgangsmaterial wird nun in einer inline mit dem Extruder verbundenen Granulieranlage oder kryogenen Mahlanlage (Mühle) zu entsprechend kleinen Teilchen verarbeitet. Zum Granulieren kann insbesondere eine Heißabschlagsmikrogranulierung, z.B. eine Unterwassermikrogranulierung, oder eine Tröpfchengranulierung verwendet werden. Inline mit der Granulieranlage ist dann eine Wasserabtrennungsanlage und Trocknungsanlage vorhanden, mittels der das Pulver oder Granulat (Mikrogranulat) getrocknet wird.

Sowohl beim kryogenen Mahlen als auch beim Granulieren wird die Korngröße der einzelnen. Körner des durch das Mahlen bzw. Granulieren erhaltenen Pulvers, beispielsweise bei zumindest 80 % der Körner, unterhalb eines vorbestimmten Wertes gehalten, der in der Regel im Mikrobereich liegt. Als maximale Korngröße kann ein Wert von 500 µm, 300 µm, 100 µm, 20 µm, 10 µm oder sogar nur 1 µm eingestellt werden.

Das auf die vorgegebene Korngröße hergestellte Pulver des Compunds mit dem oder den thermoplastischen Elastomer(en) wird nun in einem Vakuummischer mit einem Fluid oder Fluidgemisch und Additiven zu einer Suspension vermischt.

Als Fluid kann natürliches Pflanzenöl, paraffinisches Weißöl oder allgemein ein flüssiges Erdölderivat verwendet werden. Als Additive werden vorzugsweise feinstgemahlene Kieselsäure (Aerosil), Pigmente und Stabilisatoren zugesetzt.

Das Mischungsverhältnis aus Kunststoffpulver einerseits und Fluid sowie Additiven andererseits liegt zwischen 99:1 und 1:99, insbesondere zwischen 70:30 und 30:70 und vorzugsweise in einem Bereich bei 50:50, jeweils bezogen auf Gewichtsprozente (Gew. %)

Zur Herstellung der Suspension seien nun drei konkrete Beispiele angegeben:

### Beispiel 1:

Ein SBS wird kryogen auf eine Korngröße kleiner 20 µm gemahlen. Das Pulver wird in einem Vakuummischer mit 30 % paraffinischem Weißöl, feinstgemahlener Kieselsäure (Aerosil), Pigmenten und Stabilisatoren zu einer Suspension vermischt.

### Beispiel 2:

Eine Mischung aus 70 % SBS, 10 % PP, 5 % Talkum, 10% Fluid und 5 % weitere Additive und Farbstoffe wird im Extruder compoundiert und homogenisiert. In einer mit dem Extruder inline verbundenen Unterwassermikrogranulierung wird das Compound auf eine Korngröße kleiner 250 µm granuliert Das Pulver wird in einem Vakuummischer mit feinstgemahlener Kieselsäure (Aerosil), Pigmente und Stabilisatoren und Fluid zu der Mischung gegeben.

### Beispiel 3:

Eine Mischung aus 40 % SEBS, 30 % PP, 10 % Talkum, 10 % Fluid und 10 % weitere Additive und Farbstoffe wird im Extruder compundiert und homogenisiert. In einer mit dem Extruder inline verbundenen Unterwassermikrogranulierung wird das Compund auf eine Korngröße kleiner 50 µm granuliert. Das Pulver wird in einem Vakuummischer im Verhältnis 2:1 mit einem weiteren oder demselben Fluid vermischt Vor der Vermischung werden noch geringe Mengen an feinstgemahlener Kieselsäure (Aerosil), Pigmenten und Stabilisatoren zu der Mischung gegeben.

Die fertige Suspension oder Paste kann nun auf verschiedene Art und Weise zu einem Kunststoffkörper weiterverarbeitet werden.

In einer vorteilhaften Ausführungsform wird die Suspension in eine Form eingebracht, wobei nicht der gesamte Hohlraum der Form mit der Suspension aufgefüllt wird, sondern nur ein Teil, dessen Menge oder Volumen abhängig von der gewünschten Wandstärke des fertigen Hohlkörpers ist. Die Form wird dann in einen Ofen eingebracht, in dem Prozesstemperaturen zwischen 50°C und 350°C, insbesondere zwischen 160°C und 260°C und um etwa 200° C eingestellt werden. Nun wird die Form bei diesen Prozesstemperaturen mehrachsig gleichtmäßig rotiert. Es bildet sich nach einem bestimmten Zeitraum, z.B. bei einem Puppenbein nach ca. 7 min., durch Gelieren der Suspension ein zusammenhängender, im wesentlichen fester Hohlkörper an der Innenseite der Form, der nach Herausnehmen der Form aus dem Ofen und Abkühlen der Form entnommen werden kann. Die Form ist vorzugsweise eine Metallform, kann aber auch aus einem anderem Material bestehen, beispielsweise Keramik oder Kunststoff.

Für diesen Rotationsguss-Prozess zum Herstellen des Hohlkörpers aus der Suspension können alle an sich bekannten Verfahren und Anlagen verwendet werden, insbesondere die eingangs erwähnten Techniken aus dem *"Kunststoff-Kompendium"* von *Adolf Franck.* Alternativ sind auch alle anderen bekannten Prozesse, insbesondere die eingangs genannten, in dem *"Kunststoff-Kompendium"* von *Adolf Franck* beschriebenen Verfahren, einsetzbar zur Gelierung der Suspension. Ohne Beschränkung der Allgemeinheit seien hier das Gießen, Tauchen und das Beschichten (oder: Rakelverfahren) genannt

## Patentansprüche

1. Verfahren zur Herstellung wenigstens eines Körpers,
bei dem der Körper aus einer fließfähigen Mischung in Form einer Suspension aus Teilchen und einem Fluid erzeugt wird,
wobei die Teilchen ein thermoplastisches Elastomer enthalten und eine Teilchengröße aufweisen, die unterhalb 500 µm liegt,
**dadurch gekennzeichnet,**
**dass** die Teilchen zusätzlich wenigstens einen weiteren Thermoplasten, ausgenommen PVC, und/oder wenigstens einen Füllstoff enthalten.

2. Verfahren nach Anspruch 1,
bei dem die Teilchen der fließfähigen Mischung wenigstens eine oder mehrere aus der Farbstoffe und Additive umfassenden Gruppe von Substanzen enthalten.

3. Verfahren nach Anspruch 1 oder Anspruch 2, bei dem eine fließfähige Mischung verwendet wird, bei der die Teilchen zu einem Anteil von 1 Gewichtsprozent bis kleiner 100 Gewichtsprozent aus thermoplastischem Elastomer bestehen.

4. Verfahren nach einem oder mehreren der vorhergehenden Ansprüche, bei dem eine fließfähige Mischung verwendet wird, bei der die Teilchen wenigstens teilweise aus einer Mischung oder Zusammensetzung oder einem Compound aus mehreren thermoplastischen Elastomeren bestehen.

5. Verfahren nach einem oder mehreren der vorhergehenden Ansprüche, bei dem für die Teilchen der fließfähigen Mischung eines oder mehrere aus der Styrol-Ethylen-Butylen-Styrol, Styrol-Butadien-Styrol und thermoplastisches Polyurethan umfassenden Gruppe von thermoplastischen Elastomeren verwendet wird bzw. werden.

6. Verfahren nach einem oder mehreren der vorhergehenden Ansprüche, bei dem eine fließfähige Mischung verwendet wird bei der die Teilchen als weitere Thermoplaste oder weitere Thermoplasten ein Polypropylen und/oder ein Polyethylen und/oder ein Polybutylen und/oder ein Polystyrol, enthalten.

7. Verfahren nach Anspruch 6, bei dem der Anteil des oder der weiteren Thermoplaste in den Teilchen der fließfähigen Mischung so gewählt wird oder ist, dass er mehr als 0 Gewichtsprozent und bis 80 Gewichtsprozent beträgt.

8. Verfahren nach einem oder mehreren der vorhergehenden Ansprüche, bei dem eine fließfähige Mischung verwendet wird, in der die Teilchen eine Teilchengröße aufweisen, die unterhalb 300 µm oder 100 µm oder 50 µm oder 20 µm oder 1 µm liegt.

9. Verfahren nach einem oder mehreren der vorhergehenden Ansprüche, bei dem eine fließfähige Mischung verwendet wird, in der wenigstens ein Teil der Teilchen eine kugelförmige oder faserige Gestalt aufweisen.

10. Verfahren nach einem oder mehreren der vorhergehenden Ansprüche, bei dem die Teilchen der fließfähigen Mischung durch kryogenes Mahlen eines das oder die thermoplastischen Elastomere und wenigstens eine weitere Komponente enthaltenden Ausgangsmaterials hergestellt werden oder hergestellt sind.

11. Verfahren nach einem oder mehreren der vorhergehenden Ansprüche, bei dem die Teilchen der fließfähigen Mischung durch Granulieren, insbesondere Heißabschlagsmikrogranulieren oder Unterwassermikrogranulieren oder Tröpfchengranulieren, eines das oder die thermoplastischen Elastomere und wenigstens eine weitere Komponente enthaltenden Ausgangsmaterials, gegebenenfalls mit anschließender Wasserabtrennung und/oder Trocknung des beim Granulieren erhaltene Granulats, hergestellt werden oder hergestellt sind.

12. Verfahren nach einem der Ansprüche 10 und 11, bei dem das Ausgangsmaterial für das kryogene Mahlen oder Granulieren durch Extrudieren hergestellt wird oder hergestellt ist.

13. Verfahren nach einem oder mehreren der vorhergehenden Ansprüche, bei dem die fließfähige Mischung oder ihre Teilchen oder das Ausgangsmaterial für die Herstellung ihrer Teilchen als Füllstoff Talkum und/oder Kreide und/oder Mineralpulver und/oder Duroplastpulver und/oder Glaspulver und/oder Ruß und/oder Titandioxid und/oder Calciumcarbonat enthält bzw. enthalten, vorzugsweise in einem Anteil von mehr als 0 Gewichtsprozent und bis zu 80 Gewichtsprozent.

14. Verfahren nach einem oder mehreren der vorhergehenden Ansprüche, bei dem die fließfähige Mischung oder ihre Teilchen oder das Ausgangsmaterial für die Herstellung ihrer Teilchen als Additiv oder Additive Fließverbesserer und/oder Wärmestabilisatoren und/oder Lichtstabilisatoren und/oder Alterungsstabilisatoren und/oder Trennmittel und/oder Antischaummittel und/oder Emulgatoren und/oder feinstgemahlene Kieselsäure enthält bzw. enthalten.

15. Verfahren nach einem oder mehreren der vorhergehenden Ansprüche, bei dem die fließfähige Mischung oder ihre Teilchen oder das Ausgangsmaterial für die Herstellung ihrer Teilchen als Farbstof oder Farbstoffe Farbpigmente und/oder Flüssigfarbe und/oder Farbpigment-Hilfstoffe enthält bzw. enthalten.

16. Verfahren nach einem oder mehreren der vorhergehenden Ansprüche, bei dem die fließfähige Mischung durch Vermischen einer Vielzahl von Teilchen mit einem Fluid, vorzugsweise unter Vakuum, hergestellt wird oder ist.

17. Verfahren nach einem der vorhergehenden Ansprüche, bei dem eine fließfähige Mischung verwendet wird, bei der das Fluid eines oder mehrere aus der natürliches Pflanzenöl, Erdölderivat und paraffinisches Weißöl umfassenden Gruppe von Fluiden enthält.

18. Verfahren nach einem oder mehreren der vorhergehenden Ansprüche, bei dem der Körper aus der fließfähigen Mischung durch Gelieren bei wenigstens einer Prozesstemperatur erzeugt wird.

19. Verfahren nach einem oder mehreren der vorhergehenden Ansprüche, bei dem
a) eine Form wenigstens teilweise mit der fließfähigen Mischung befüllt wird und
b) die Form auf wenigstens eine Prozesstemperatur gebracht wird und/oder auf wenigstens einer Prozesstemperatur gehalten wird, wobei sich in der Form der Körper, insbesondere als Hohlkörper, ausbildet

20. Verfahren nach Anspruch 19, bei dem die Form, insbesondere mit wenigstens zwei Rotationsfreiheitsgraden, rotiert wird.

21. Verfahren nach einem oder mehreren der Ansprüche 19 und 20, bei dem die Form nach einer vorbestimmten Zeitdauer oder nach Ausbildung des Körpers abgekühlt wird und der Körper der Form entnommen wird.

22. Verfahren nach einem oder mehreren der Ansprüche 1 bis 18, bei dem bei wenigstens einer Prozesstemperatur
a) ein Gegenstand oder eine Form in die fließfähige Mischung getaucht wird und
b) der Körper sich auf dem Gegenstand oder der Form ausbildet.

23. Verfahren nach einem oder mehreren der Ansprüche 1 bis 18, bei dem bei wenigstens einer Prozesstemperatur
a) ein Gegenstand mit der fließfähigen Mischung bestrichen wird und
b) der Körper sich als Beschichtung auf dem Gegenstand ausbildet.

24. Verfahren nach einem oder mehreren der Ansprüche 18 bis 23, bei dem die Prozesstemperatur oder Prozesstemperaturen zwischen etwa 50°C und etwa 350°C, insbesondere zwischen 160°C und 260°C und vorzugsweise bei etwas 200°C liegt bzw. liegen.

25. Verfahren nach einem der vorhergehenden Ansprüche zur Herstellung von Spielwaren, insbesondere Spielzeugpuppen, oder Teilen davon.

26. Verfahren nach einem der vorhergehenden Ansprüche zur Herstellung von Körpern oder Teilen davon für technische Gegenstände, insbesondere Faltenbälge oder Autotürlehnen oder Dichtungen oder Förderbänder, Freizeit- oder Sportartikel, insbesondere Bälle oder Handschuhe, Konsumartikel, insbesondere Gartenzwerge oder andere Figuren, oder Hygieneartikel oder Verpackungen oder Planen oder Fußbodenbeläge oder Unterbodenschutzschichten oder Beschichtungen von Textilien oder Glasgeweben oder von Werkzeuggriffen oder Kleiderbügeln oder Gartenzaundrähten.

27. Fließfähige Mischung entweder zur Verwendung in einem Verfahren nach einem der vorhergehenden Ansprüche oder zur Verwendung bei der Herstellung von Hohlkörpern aus Kunststoff im Rotationsguss-Verfahren, bei dem eine Form mit einer geeigneten Menge der Suspension befüllt wird, bei dem die Form in einem Ofen bei geeigneter Temperatur mehrachsig rotiert wird, bei dem die Suspension geliert, bei dem die Form dem Ofen entnommen wird, bei dem die Form abgekühlt wird und bei dem der Hohlkörper aus der Form entnommen wird, umfassend
a) Teilchen, mit einer Korngröße zumindest kleiner als 500 µm und
b) ein Fluid, in dem die Teilchem suspendiert ist.
c) wobei die Teilchen wenigstens ein thermoplastisches Elastomer sowie zusätzlich wenigstens einen weiteren Thermoplasten, ausgenommen PVC, und/oder wenigstens einen Füllstoff enthalten.

28. fließfähige Mischung nach Anspruch 27,
bei der die Teilchen wenigstens eine oder mehrere aus der Farbstoffe und Additive umfassenden Gruppe von Substanzen enthalten.

## Revendications

1. Procédé pour la production d'au moins un corps,
dans lequel le corps d'un mélange fluide sous la forme d'une suspension de particules et d'un fluide est produit,
où les particules contiennent un élastomère thermoplastique et présentent une grandeur de particule qui est en dessous de 500 µm,
**caractérisé en ce que**
les particules contiennent de plus au moins une autre matière thermoplastique, à l'exclusion de PVC et/ou au moins une charge.

2. Procédé selon la revendication 1,
dans lequel les particules du mélange fluide contiennent au moins un ou plusieurs des groupes de substances comprenant des colorants et additifs.

3. Procédé selon la revendication 1 ou la revendication 2,
dans lequel on utilise un mélange fluide dans lequel les particules se composent pour une part de 1% en poids à moins de 100% en poids de l'élastomère thermoplastique.

4. Procédé selon l'une quelconque des revendications précédentes, dans lequel un mélange fluide est utilisé,
dans lequel les particules se composent au moins partiellement d'un mélange ou d'une composition ou d'un composé formé de plusieurs élastomères thermoplastiques.

5. Procédé selon l'une quelconque des revendications précédentes, dans lequel on utilise, pour les particules du mélange fluide, un ou plusieurs groupes d'élastomères thermoplastiques comprenant du styrène-éthylène-butylène-styrène, du styrène-butadiène-styrène et des polyuréthannes thermoplastiques.

6. Procédé selon l'une quelconque des revendications précédentes, dans lequel on utilise un mélange fluide dans lequel les particules contiennent, comme autre matière thermoplastique ou autres matières thermoplastiques, un polypropylène et/ou un polyéthylène et/ou un polybutylène et/ou un polystyrène.

7. Procédé selon la revendication 6, dans lequel la proportion de l'autre ou des autres matières thermoplastiques dans les particules du mélange fluide est choisie de façon à représenter plus de 0 % en poids jusqu'à 80 % en poids.

8. Procédé selon l'une quelconque des revendications précédentes, dans lequel un mélange fluide est utilisé, dans lequel les particules présentent une grandeur de particule qui est en dessous de 300 µm ou 100 µm ou 50 µm ou 20 µm ou 1 µm.

9. Procédé selon l'une quelconque des revendications précédentes, dans lequel un mélange fluide est utilisé, dans lequel au moins une partie des particules présente une configuration en bille ou en fibre.

10. Procédé selon l'une quelconque des revendications précédentes, dans lequel les particules du mélange fluide sont produites par broyage cryogénique du ou des élastomères thermoplastiques et d'au moins une matière première contenant un autre composant.

11. Procédé selon l'une quelconque des revendications précédentes, dans lequel les particules du mélange fluide sont produites par granulation, en particulier microgranulation à chaud ou microgranulation sous l'eau ou granulation en gouttelettes, de la matière première contenant l'un ou les élastomères thermoplastiques et au moins un autre composant, le cas échéant avec séparation subséquente de l'eau et/ou séchage du granulat obtenu à la granulation.

12. Procédé selon l'une des revendications 10 et 11, dans lequel la matière première pour le broyage cryogénique ou la granulation est produite par extrusion.

13. Procédé selon l'une quelconque des revendications précédentes, dans lequel le mélange fluide ou ses particules ou la matière première pour la production de ses particules contient ou respectivement contiennent, comme charge, du talc et/ou de la craie et/ou une poudre minérale et/ou une résine thermoplastique en poudre et/ou une poudre de verre et/ou de la suie et/ou du bioxyde de titane et/ou du carbonate de calcium, avantageusement à une proportion de plus de 0 % en poids jusqu'à 80 % en poids.

14. Procédé selon l'une quelconque des revendications précédentes, dans lequel le mélange fluide ou ses particules ou la matière première pour la production de ses particules contient ou respectivement contiennent, en tant qu'additif ou additifs, des agents améliorant la fluidité et/ou stabilisants à la chaleur et/ou stabilisants à la lumière et/ou stabilisants au vieillissement et/ou agents de séparation et/ou agents anti-mousse et/ou agents émulsionnants et/ou acide silicique.

15. Procédé selon l'une quelconque des revendications précédentes, dans lequel le mélange fluide ou ses particules ou bien la matière première pour la production de ses particules contient ou respectivement contiennent, en tant que matière(s) colorante(s), des pigments et/ou des colorants fluides et/ou des matières auxiliaires contenant des pigments.

16. Procédé selon l'une quelconque des revendications précédentes, dans lequel le mélange fluide est produit par mélange d'un certain nombre de particules avec un fluide, avantageusement sous vide.

17. Procédé selon l'une quelconque des revendications précédentes, dans lequel on utilise un mélange fluide dans lequel le fluide contient un ou plusieurs du groupe de fluides comprenant de l'huile végétale, un dérivé de pétrole ou de l'huile blanche paraffinique.

18. Procédé selon l'une quelconque des revendications précédentes, dans lequel le corps est produit à partir du mélange fluide par gélification à au moins une température de traitement.

19. Procédé selon l'une quelconque des revendications précédentes, dans lequel
a) un moule est au moins partiellement rempli du mélange fluide et
b) le moule est porté au moins à une température de traitement et/ou est maintenu à au moins une température de traitement, ce par quoi le corps se forme dans le moule, en particulier en tant que corps creux.

20. Procédé selon la revendication 19, dans lequel le moule est tourné, en particulier, avec au moins deux degrés de liberté de rotation.

21. Procédé selon l'une quelconque des revendications 19 et 20, dans lequel le moule, après un temps prédéterminé ou après formation du corps, est refroidi et le corps est sorti du moule.

22. Procédé selon l'une quelconque des revendications 1 à 18, dans lequel, à au moins une température de procédé,
a) un objet ou un moule est plongé dans le mélange fluide et
b) le corps se forme à partir de l'objet ou du moule.

23. Procédé selon l'une quelconque des revendications 1 à 18, dans lequel, à au moins une température de procédé
a) un objet est enduit du mélange fluide et
b) le corps se forme en tant qu'enduction sur l'objet.

24. Procédé selon l'une quelconque des revendications 18 à 23, dans lequel la température de procédé ou les températures de procédé est ou sont comprises entre environ 50°C et environ 350°C, en particulier entre 160°C et 260°C et, avantageusement, est ou sont de l'ordre de 200°C.

25. Procédé selon l'une quelconque des revendications précédentes, pour la production de jouets, en particulier, poupées ou pièces de celles-ci.

26. Procédé selon l'une quelconque des revendications précédentes, pour la production de corps ou pièces pour des objets techniques, en particulier soufflets ou appuis dans les portières de voiture, ou étanchéités ou bandes transporteuses, articles de sport ou de distraction, en particulier balles ou gants, articles de consommation, en particulier nains de jardin ou autres figures, ou bien articles pour l'hygiène ou emballages ou recouvrements de sol ou couches de protection intermédiaire ou enduction de textiles ou de tissu de verre ou de poignées d'outils ou de cintres pour vêtements ou de fils de bordures de jardin.

27. Mélange fluide, soit pour l'utilisation dans un procédé selon l'une quelconque des revendications précédentes ou bien pour l'utilisation dans la fabrication de corps creux en matière synthétique dans un procédé de fonte en rotation, où un moule est rempli d'une quantité appropriée de la suspension, où le moule est tourné sur plusieurs axes dans un four à une température appropriée, où la suspension se gélifie, où le moule est sorti du four, où le moule est refroidi et où le corps creux est sorti du moule, comprenant
a) des particules avec une granulométrie au moins plus petite que 500 µm et
b) un fluide dans lequel les particules sont en suspension
c) où les particules contiennent au moins un élastomère thermoplastique ainsi que, de plus, au moins une autre matière thermoplastique, à l'exclusion de PVC et/ou au moins une charge.

28. Mélange fluide selon la revendication 27,
dans lequel les particules contiennent au moins un ou plusieurs du groupe de substances comprenant des colorants et des additifs.

## Claims

1. Process for producing at least one body, in which the body is produced from a pourable mixture in the form of a suspension of particles and a fluid, wherein the particles contain a thermoplastic elastomer and have a particle size which lies below 500 µm, **characterised in that** the particles additionally contain at least one further thermoplastic, excluding PVC, and/or at least one filler.

2. Process according to claim 1, in which the particles of the pourable mixture contain at least one or more of the group of substances comprising dyestuffs and additives.

3. Process according to claim 1 or claim 2, in which a pourable mixture is used, in which a proportion of 1 weight per cent to less than 100 weight per cent of the particles consist of thermoplastic elastomer.

4. Process according to one or more of the preceding claims, in which a pourable mixture is used, in which the particles consist at least partly of a mixture or composition or a compound of several thermoplastic elastomers.

5. Process according to one or more of the preceding claims, in which one or more of the group of thermoplastic elastomers comprising styrene-ethylenebutylene-styrene, styrene-butadiene-styrene and thermoplastic polyurethane is or are used for the particles of the pourable mixture.

6. Process according to one or more of the preceding claims, in which a pourable mixture is used, in which the particles contain a polypropylene and/or a polyethylene and/or a polybutylene and/or a polystyrene as further thermoplastic or further thermoplastics.

7. Process according to claim 6, in which the proportion of the further thermoplastic or thermoplastics in the particles of the pourable mixture is selected so that it is more than 0 weight per cent and up to 80 weight per cent.

8. Process according to one or more of the preceding claims, in which a pourable mixture is used, in which the particles have a particle size which lies below 300 µm or 100 µm or 50 µm or 20 µm or 1 µm.

9. Process according to one or more of the preceding claims, in which a pourable mixture is used, in which at least some of the particles have a spherical or fibrous shape.

10. Process according to one or more of the preceding claims, in which the particles of the pourable mixture are produced by cryogenic grinding of a starting material containing the thermoplastic elastomer or elastomers and at least one further component.

11. Process according to one or more of the preceding claims; in which the particles of the pourable mixture are produced by granulation, in particular die-face microgranulation or underwater microgranulation or droplet granulation, of a starting material containing the thermoplastic elastomer or elastomers and at least one further component, optionally with subsequent water separation and/or drying of the granules obtained during granulation.

12. Process according to one of claims 10 and 11, in which the starting material for cryogenic grinding or granulation is produced by extrusion.

13. Process according to one or more of the preceding claims, in which the pourable mixture or its particles or the starting material for the production of its particles contains or contain as filler, talcum and/or chalk and/or mineral powder and/or thermoset plastic powder and/or glass powder and/or carbon black and/or titanium dioxide and/or calcium carbonate, preferably in a proportion of more than 0 weight per cent and up to 80 weight per cent.

14. Process according to one or more of the preceding claims, in which the pourable mixture or its particles or the starting material for the production of its particles contains or contain as additive or additives, flow improvers and/or heat stabilisers and/or light stabilisers and/or ageing stabilisers and/or release agents and/or anti-foaming agents and/or emulsifiers and/or pulverised silicic acid.

15. Process according to one or more of the preceding claims, in which the pourable mixture or its particles or the starting material for the production of its particles contains or contain as dyestuff or dyestuffs, coloured pigments and/or liquid dye and/or coloured pigment auxiliaries.

16. Process according to one or more of the preceding claims, in which the pourable mixture is produced by mixing a number of particles with a fluid, preferably under vacuum.

17. Process according to one of the preceding claims, in which a pourable mixture is used, in which the fluid contains one or more of the group of fluids comprising natural vegetable oil, petroleum derivative and paraffinic white oil.

18. Process according to one or more of the preceding claims, in which the body is produced from the pourable mixture by gelling at least at one process temperature.

19. Process according to one or more of the preceding claims, in which
a) a mould is filled at least partly with the pourable mixture and
b) the mould is brought at least to a process temperature and/or is kept at least at a process temperature, wherein the body, in particular as a hollow body, is formed in the mould.

20. Process according to claim 19, in which the mould, in particular having at least two degrees of rotational freedom, is rotated.

21. Process according to one or more of claims 19 and 20, in which the mould is cooled after a predetermined period of time or after forming the body and the body is removed from the mould.

22. Process according to one or more of claims 1 to 18, in which at least at one process temperature
a) an object or a mould is immersed in the pourable mixture and
b) the body is formed on the object or the mould.

23. Process according to one or more of claims 1 to 18, in which at least at one process temperature
a) an object is daubed with the pourable mixture and
b) the body is formed as a coating on the object.

24. Process according to one or more of claims 18 to 23, in which the process temperature or process temperatures lies or lie between about 50°C and about 350°C, in particular between 160°C and 260°C and preferably at about 200°C.

25. Process according to one of the preceding claims for the production of toys, in particular toy dolls, or parts thereof.

26. Process according to one of the preceding claims for the production of bodies or parts thereof for technical objects, in particular shock absorbers or car door rests or seals or conveyer belts, leisure or sports articles, in particular balls or gloves, consumer goods, in particular garden gnomes or other figures, or sanitary articles or packages or canopies or floor coverings or underfloor protective layers or coatings of textiles or glass fabrics or of tool handles or clothes hangers or garden fence wires.

27. Pourable mixture either for use in a process according to one of the preceding claims or for use in the production of hollow bodies made from plastic by a rotational casting process, in which a mould is filled with a suitable quantity of suspension, in which the mould is rotated in multi-axial manner in a furnace at suitable temperature, in which the suspension gels, in which the mould is removed from the furnace, in which the mould is cooled and in which the hollow body is removed from the mould, comprising
a) particles having a grain size at least less than 500 µm and
b) a fluid in which the particles are suspended,
c) wherein the particles contain at least one thermoplastic elastomer and additionally at least one further thermoplastic, excluding PVC, and/or at least one filler.

28. Pourable mixture according to claim 27, in which the particles contain at least one or more of the group of substances comprising dyestuffs and additives.
